(19) Europäisches Patentamt
European Patent Office
Office européen des brevets

(11) **EP 4 350 718 A1**

(12) **EUROPÄISCHE PATENTANMELDUNG**

(43) Veröffentlichungstag:
**10.04.2024 Patentblatt 2024/15**

(21) Anmeldenummer: **23201540.4**

(22) Anmeldetag: **04.10.2023**

(51) Internationale Patentklassifikation (IPC):
***H01F 1/34*** *(2006.01)* ***H01F 1/37*** *(2006.01)*
***H01F 1/00*** *(2006.01)*

(52) Gemeinsame Patentklassifikation (CPC):
**H01F 1/37; H01F 1/348;** H01F 1/0063

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **07.10.2022 DE 102022125940**

(71) Anmelder: **Thüringisches Institut für Textil-
und Kunststoff-Forschung e.V.
07407 Rudolstadt (DE)**

(72) Erfinder:
• **Pflug, Günther
07407 Rudolstadt (DE)**
• **Gladitz, Michael
07318 Saalfeld (DE)**
• **Reinemann, Stefan
07407 Rudolstadt (DE)**

(74) Vertreter: **Plate, Jürgen
Plate Schweitzer Zounek
Patentanwalt
Industriepark Kalle-Albert, Gebäude H391
Rheingaustraße 196
65203 Wiesbaden (DE)**

(54) **MAGNETISCHE, FUNKTIONALISIERTE POLYMERSUBSTRATE FÜR HOCHFREQUENZANWENDUNGEN**

(57) Im Patent werden magnetodielektrische Polymerkomposite mit erhöhter Brechzahl und stark reduzierten Dämpfungsverlusten für die Miniaturisierung von Antennen im MHz- und angrenzenden GHz-Frequenzbereich beschrieben, wobei die magnetische Füllstoffkomponente durch den Einsatz einer hochverzweigten Polymerverbindung im betreffenden Polymer während der Verarbeitung effizienter dispergiert und aufgrund deren Spacerfunktion auch besser in einer 0-3 Struktur mit der umgebenden Polymermatrix eingebunden wird.

Abbildung 2

EP 4 350 718 A1

**Beschreibung**

Im Patent werden magnetodielektrische Polymerkomposite mit erhöhter Brechzahl und stark reduzierten Dämpfungsverlusten für die Miniaturisierung von Antennen im MHz- und angrenzenden GHz-Frequenzbereich beschrieben, wobei die magnetische Füllstoffkomponente durch den Einsatz einer hochverzweigten Polymerverbindung im betreffenden Polymer während der Verarbeitung effizienter dispergiert und aufgrund deren Spacerfunktion auch besser in einer 0-3 Struktur mit der umgebenden Polymermatrix eingebunden wird.

**[Stand der Technik]**

Magnetodielektrische Polymerkomposite stellen heterogene Gemenge aus einer oder mehreren magnetischen Füllstoffkomponenten in einer dielektrischen Kunststoffmatrix dar, wodurch gleichzeitig magnetische und dielektrische Materialeigenschaften in den Kunststoffen integriert werden. Entsprechend der Untersuchungen von Mosallaei und Sarabandi "Magneto-Dielectrics in Electromagnetics: Concepts and Applications" in IEEE Transactions on Antennas and Propagation Vol. 52, No. 6 (2004) S. 1558-1569 und von Juuti und Teirikangas "Thermoplastic 0-3 Ceramic-Polymer Composites with Adjustable Magnetic and Dielectric Characteristics for Radio Frequency Applications" in International Journal of Applied Ceramic Technology Vol. 7, No. 4 (2010) S. 452-460 können magnetodielektrische Polymerkomposite als Substrate für die Miniaturisierung von Hochfrequenzvorrichtungen wie Antennen eingesetzt werden.

Die Studie von Yang und Mitarbeiter "Comprehensive Study on the Impact of Dielectric and Magnetic Loss on Performance of a Novel Flexible Magnetic Composite Material" Proceeding of the 38th European Microwave Conference, in Amsterdam, October 2008, befasst sich mit der Applikation magnetodielektrischer Polymerverbunde in Radiofrequenz-Identifikation-Systemen (RFID).

Lee und Cho u. a. berichteten im Beitrag "Flexible Magnetic Polymer Composite Substrate with Ba1.5Sr1.5Z Hexaferrite Particles of VHF/Low UHF Patch Antennas for UAVs and Medical Implant Devices" in Materials 2020, 13, 1021 S. 1-10 aus dem Jahr 2020 über die Miniaturisierung von Antennen mittels integrierter flexibler Polymerkomposite aus Polyurethan/ Hexaferrit, die im Frequenzbereich von einigen Hundert MHz insbesondere bei 400 MHz in Drohnen oder in medizinischen Implantaten eingesetzt werden können.

Beim Einsatz magnetodielektrischer Polymerkomposite ergeben sich für die Miniaturisierung bei Streifenleitungsantennen mit der Brechzahl n und dem Miniaturisierungsfaktor k für die Realteile der Permittivität $\varepsilon'$ und der magnetischen Permeabilität $\mu'$ dann folgende Zusammenhänge:

$$n = \sqrt{\varepsilon' \cdot \mu'} \quad \text{und} \quad k = \frac{1}{\sqrt{\varepsilon' \cdot \mu'}} \qquad \text{Gl. 1}$$

Streifenleitungsantennen mit magnetodielektrischen Polymersubstraten erreichen gegenüber rein dielektrisch gefüllten Polymerverbunden wegen $\mu > 1$ eine höhere Brechzahl und gemäß Gl. 2 auch eine bessere Impedanzanpassung IA.

$$IA = \sqrt{\frac{\mu'}{\varepsilon'}} \quad \text{und} \quad ID = \left(1 - \sqrt{\frac{\mu'}{\varepsilon'}}\right) \qquad \text{Gl. 2}$$

Für den Idealfall der Impedanzanpassung IA = $(\mu'/\varepsilon')^{1/2}$ = 1 oder einer Impedanzdifferenz ID = 0 verschwinden Reflexionen und Oberflächenwellen der Streifenleiter-Antenne, die beim Betrieb der Antenne bereits einen gewissen Leistungsverlust erzeugen können.

Beträchtliche magnetische und dielektrische Dämpfungsverluste und damit Verluste der aufgenommenen und abgegebenen Leistung beim Empfang und Senden der Antennen können im MHz- und GHz-Frequenzbereich bei ungünstiger Wahl der magnetodielektrischen Polymersubstrate insbesondere bei stark dämpfenden magnetischen Füllstoffen und Polymermatrizes entstehen. Für Antennen mit hoher Strahlungseffizienz und größerem Antennengewinn (Gain) im Bereich der Resonanzfrequenz $f_r$ sind möglichst kleine dielektrische und magnetische Dämpfungsverluste der eingesetzten Polymerkomposite erforderlich. Die Verlusttangenswerte werden jeweils aus den Quotienten der Imaginärteile $\mu''$ und $\varepsilon''$ und den zugehörigen Realteilen $\varepsilon'$ und $\mu'$ berechnet, wobei hinreichend kleine Dämpfungsverluste noch unterhalb 0,1 liegen:

$$tan\delta_\varepsilon = \frac{\varepsilon''}{\varepsilon'} < 0,1 \quad und \quad tan\delta_\mu = \frac{\mu''}{\mu'} < 0,1 \qquad \text{Gl. 3}$$

Bei der Herstellung der magnetodielektrisch gefüllten Polymerkomposite werden ein hoher Dispersionsgrad und eine weitgehende Vereinzelung der magnetischen Füllstoffteilchen in einer 0-3 Umgebung mit der Polymermatrix angestrebt. Einen Überblick zu rein dielektrisch und auch magnetisch gefüllten Polymer-Keramik-Verbunden mit einer 3-dimensionalen Konnektivität der Keramikkomponente zur Polymerphase liefert die Studie von Sebastian und Jantunen "Polymer-Ceramic Composites of 0-3 Connectivity for Circuits in Electronics: A Review" in International Journal of Applied Ceramic Technology, Vol. 7, No. 4, (2010) Seite 415-434.

Van-der-Waals-Kräfte sind schwache Wechselwirkungskräfte zwischen Atomen und Molekülen, die im Beitrag von Winkler "Dispergieren von Pigmenten und Füllstoffen, Farben und Lacke", Herausgeber Vincentz, SBN-10: 3866309090, vom November 2010, mit der Abstandsvergrößerung auch zwischen Füllstoffteilchen mit der 6. Potenz abnehmen.

Entsprechend der Untersuchungen in der Dissertation von Damavandi an der Technischen Universität Kaiserslautern von 2015 "Einfluss innerer Oberflächen auf die strukturellen und mechanischen Eigenschaften von Polymer-Metall-Verbunden" in Kapitel 2.5.5 "Innere Oberfläche der Füllstoffe", nehmen die van-der-Waals-Kräfte und die Neigung zur Agglomeratbildung mit steigender Packungsdichte und insbesondere bei der Reduzierung der Korngrößen der Füllstoffe von wenigen Mikrometern zu Teilchen submikroner oder nanoskaliger Dimension enorm zu.

Durch die Verringerung des Dispersionsgrades und eine ungenügende Vereinzelung der magnetischen Füllstoffkomponente in den Polymersubstraten werden Permittivität $\varepsilon'$ und magnetische Permeabilität $\mu'$ abgesenkt, was im Hochfrequenzbereich mit der Absenkung der Brechzahl der Polymerkomposite einhergeht.

Durch den Einsatz hyperverzweigter oder dendritischer Polymerverbindungen sollen die magnetischen Füllstoffteilchen besser in der Polymermatrix dispergiert und in einer idealisierten 0-3 Umgebung mit der Polymerkomponente eingebunden werden. Die spezielle Spacerfunktion der hyperverzweigten Polymere in den hochgefüllten magnetodielektrischen Polymerkompositen ermöglicht eine Steigerung von Permittivität $\varepsilon'$ und magnetischer Permeabilität $\mu'$ und dadurch eine Anhebung der Brechzahl der polymerbasierten Antennensubstrate.

Als typische Dispersionsadditive mit chemischer Kupplungswirkung sind für die Einarbeitung von Füllstoffen und Pigmenten in Kunststoffen laut "Applied Plastics Engineering Handbook" edited by Myer Kutz, Elsevier Inc 2017, ISBN: 978-0-323-39040-8, in Kapitel 25 "Dispersants and Coupling" u. a. Organosilane, Organometallverbindungen (wie Titanate, Zirkonate und Aluminate), ungesättigte Carbonsäuren, acryl- und maleinsäurefunktionalisierte Polymere geeignet, die aufgrund der Anker-Puffer-Struktur auch zur sterischen Stabilisierung und besseren Deagglomeration der Magnetteilchen in den magnetodielektrischen Polymerverbunden beitragen können.

Infolge des polaren Charakters dieser Dispersionszusätze steigen die dielektrischen und magnetischen Dämpfungsverluste der gefüllten Polymerverbunde aber stark an.

Unpolare oder polare Wachsadditive ohne spezielle Kupplungsfunktion wie Polyolefinwachse, Amid- und Montanwachse wirken je nach Verträglichkeit mit der Polymermatrix als äußere (unverträglich) und innere Gleitmittel (verträglich), welche die Prozessfähigkeit der Schmelzen während der Verarbeitung verbessern und insbesondere die Viskosität absenken können.

Die Dispergierwirkung der leichtfließenden Wachsadditive wird bei den gesinterten Ferriten durch die Porosität der keramischen Teilchen und die stärkere Absorption der Polymerschmelze an der offenporigen Ferritoberfläche reduziert.

Das Patent US 20150255196 der University of South Florida "Magneto-Dielectric Polymer Nanocomposites and Method of Making" aus dem Jahr 2015 beansprucht $CoFe_2O_4$- und $Fe_3O_4$-Nanopartikel in einer Butadien-Copolymer-Lösung, wobei die grenzflächenaktiven Substanzen Oleylamin und Ölsäure zur Stabilisierung der Nanoteilchen insbesondere gegenüber der Oxidation eingesetzt werden. Durch die fehlende räumliche Ausdehnung einer starkverzweigten Molekülstruktur der hyperverzweigten Polymere oder Dendrimere können die beschriebenen grenzflächenaktiven Substanzen aber keine hinreichende Vereinzelung und Spacerwirkung zwischen den Magnetteilchen in den Polymerverbunden entfalten.

Im Patent KR20180060496 der LG Electronics Inc. "Magnetic and Dielectric Composite Structure and Method for Fabricating the same and Antenna for Using the same" von 2018 wird über die Umhüllung weichmagnetischer Metallteilchen aus Fe, Co, Ni, Mn und deren Legierungen mit einem Partikeldurchmesser zwischen 10 bis 500 nm mittels elektrisch isolierender Oxide wie $SiO_2$, $Al_2O_3$, $TiO_2$, und $ZrO_2$ mit einer 1 bis 30 nm dicken Schicht berichtet, die in Polymermatrizes wie Polyvinylpyrrolidon, Polydimethylsiloxan, PMMA, PET, Cyclo-Olefin-Copolymer, Polystyrol und Polyethylennaphthalat eingearbeitet und als magnetodielektrische Substrate für Antennen (z. B. PIFA) zwischen 700 MHz bis 3 GHz zum Einsatz kommen sollen. Da die dielektrischen und magnetischen Dämpfungswerte der Antennensubstrate im untersuchten Frequenzbereich bei Werten von $tan\delta_\varepsilon \sim 0,25$ und $tan\delta_\mu \sim 0,9\text{-}1,0$ deutlich über den oberen Grenzwerten von Gl. 3 liegen, sind aber Strahlungseffizienz und Gain dieser Antennensysteme stark reduziert.

Beansprucht werden im Patent WO2019143502 der Rogers Corporation "Core-Shell Particles Magneto-Dielectric Materials, Methods of Making, and Uses there of" aus dem Jahr 2019 sowohl die Herstellung als auch der Einsatz von Magnetteilchen in magnetodielektrische Polymerverbunde mit einer Kern-Schale-Architektur (Core-Shell-Partikel) für den Frequenzbereich um und oberhalb 1 GHz, wobei die Schale der Fe-, Ni- oder Co- Partikel u. a. durch Oxidation unter Einsatz chemischer Oxidationsmittel wie Sauerstoff oder im Plasma und auch aus Nitrid in einem separaten Verfahrensschritt gebildet werden. Nachteilig ist außer diesem zusätzlichen Verfahrensschritt auch der Einsatz von Oxidationsmitteln, wie $KMnO_4$, $K_2Cr_2O_7$ und $HNO_3$, deren Reaktionsprodukte aus dem Prozess und von den behandelten Magnetteilchen abgetrennt werden müssen.

Als nanoskalige Dispersionsadditive für gefüllte Polymerkomposite haben sich in den letzten Jahren auch polyhedrische Oligosilsesquioxane (POSS-Verbindungen) etabliert.

Spezielle Eigenschaften und Anwendungen dieser halborganischen Gerüstsilikate werden bei Xanthos "Functional Fillers for Plastics", Kapitel 23: Polyhedral Oligomeric Silsesquioxanes. WILEY-VCH Verlag, Weinheim, 2010 und durch Blanco und Mitarbeiter in der Studie "POSS-Based Polymers" in Polymers 11, 1727 S. 1-5 aus dem Jahr 2019 beschrieben. Entsprechend des Beitrags von Lee, Hwang u. a. "Low Dielectric Materials for Micro-electronics in Dielectric Materials, edited by Silaghi, Kapitel: 3, S. 59-76, in INTECH Open Access Publisher vom Januar 2012 werden die Dielektrizitätskonstante und somit die Brechzahl der Polymer-POSS-Verbunde durch Nanokavitäten in den Käfigstrukturen der POSS-Verbindungen abgesenkt.

Ein Einsatz dieser halborganischen Gerüstsilikate in die magnetodielektrischen Polymerkomposite zur besseren Dispergierung der Ferritkomponente wirkt somit der beabsichtigten Brechzahlerhöhung und Miniaturisierung der Antennensubstrate entgegen.

Im Patent WO2019006184 der Blueshift Materials Inc. "Hyperbranched POSS based Polymer Aerogels" aus dem Jahr 2019 wird ein hyperverzweigtes Polymer-Aerogel beansprucht, das aus einer offenzellig strukturierten Polymermatrix und einem organisch modifizierten POSS-Polymer besteht.

Dieses Polymermaterial wird aufgrund der abgesenkten Dichte für Radiofrequenzanwendungen und speziell als Antennensubstrat mit reduzierter Permittivität eingesetzt. Da bei den Aerogelen durch die Dichtereduzierung auch eine Absenkung der Brechzahl auftritt, sind diese Materialien für die Antennenminiaturisierung ungeeignet.

Gao, und Yan stellen in der Studie "Hyperbranched Polymers: from Synthesis to Applications" in Progress in Polymer Science, 29, (2004) S. 183-275, das Potenzial hyperverzweigter bzw. dendritischer Polymerverbindungen für die Verbesserung der Prozessfähigkeit in der Kunststoffverarbeitung und deren Eignung speziell als Dispersionsadditive für gefüllte Polymere dar.

Hyperverzweigte und dendritische Polymere werden im Übersichtsartikel von Douloudi und Mitarbeitern "Dendritic Polymers as promising Additives for the Manufacturing of Hybrid Organoceramic Nanocomposites with ameliorated Properties suitable for an extensive Diversity of Applications" in Nanomaterials 2021, 11, 19, S. 1-36, auch als Additive für die Analytik (Chromatographie), in funktionellen Beschichtungen der Elektronik und Sensorik, für die chemische Katalyse und bei medizinischen Anwendungen (Gentransfer, als antibakterielle Polymerkomposite und zur Wirkstoffverabreichung) eingesetzt.

Erwähnt werden bei mehrschichtigen magnetodielektrischen Materialien in den Patenten WO2018119341 "Multi-Layer Magneto-Dielectric Materials" und WO2018140588 "Method of Making a Multi-Layer Magneto-Dielectric Material" der Rogers Corporation aus dem Jahr 2018 außer der Verwendung von Polymermatrizes aus der großen Stoffklasse der thermoplastischen und duromeren Kunststoffe auch der Einsatz nicht näher beschriebener Dendrimere, die aber nur in den dielektrischen Zwischenschichten der Laminate eingesetzt werden und daher nicht als Abstandshalter einer 0-3 Struktur zwischen den magnetischen Füllstoffteilchen der ferromagnetischen Schicht wirken können.

Im Patent US20090053512 der ABOR Universitäten von Arizona "Multifunctional Polymer coated Magnetic Nanocomposite Material" aus dem Jahr 2009 werden polymerbeschichtete Nanoteilchen aus einem metallischen ferromagnetischen Kern insbesondere aus Cobalt und einer Polymerhülle beschrieben. Die polymerbeschichteten Nanoteilchen können dabei auch eine Hülle eines dendritischen bzw. hyperverzweigten Polymers enthalten. Die umhüllten Teilchen lassen sich unter Einwirkung eines Magnetfelds auch zu kettenförmigen Strukturen ausrichten. Entsprechend der Ausführungen im Patent US20090053512 (Absatz 0155) können die umhüllten Cobalt-Nanoteilchen in einer Beschichtung oder in einem Substrat als Mikrowellenabsorber eingesetzt werden, was aber den Einsatz als dämpfungsarme polymerbasierte Antennensubstrate ausschließt.

Im chinesischen Patent CN111548612 der Shenzhen Halcyon New Materials Co., Ltd Company "PCT/LCP Resin Composition for 5G Antenne Oscillator Base Materials as well as Preparation Method and Application thereof" von 2020 werden Polymerblends aus PCT (Cyclohexadimethanol-Dimethylterephthalat - CHDM-DMT) und TLCP (thermoplastischen LCP) mit einer Glas- oder Wollastonitfaser oder einer mineralischen Komponente als Antennensubstrate für den 5G-Frequenzbereich beansprucht.

Als Dispersionsadditive kommen in den PCT/TLCP-Polymerkompositen u. a. auch hyperverzweigte Polymere zum Einsatz. Die beschriebenen PCT/TLCP-Polymerkomposite liegen aber nur als rein dielektrisch gefüllte Polymerrezepturen vor. Eingesetzte dielektrische Glasfasern oder mineralische Komponenten tragen aufgrund der niedrigen Permittivität der Füllstoffe gegenüber üblichen Titanaten, Niobaten oder Zirkonaten entsprechend der Übersichtsstudie von Sebastian, Ubic und Jantunen "Microwave Materials and Application", ISBN 9871119208525, First Edition, John Wiley & Sons, S. 855 ff. von 2017 nur wenig zur Steigerung der Brechzahl der Polymerverbunde bei, zumal die nichtmagnetischen Füllstoffe nur eine magnetische Permeabilität $\mu'$ von 1 aufweisen.

In den Untersuchungen von Menezes und Fechine u. a. "From Magneto-Dielectric Biocomposite Films to Microstrip Antenna Devices" im Journal of Composite Science, 2020, 4, 144, S.1-20 wurden in Biopolymere aus Chitosan, Cellulose und Collagen superparamagnetische Eisenoxid-Nanotteilchen (Superparamagnetic Iron Oxide Nanoparticles-SPIONS) eingearbeitet. Zur Verbesserung der Dispergierung der magnetischen Eisenpartikel in den Polymermatrizes und der höheren Stabilität gegenüber Oxidation wurde die Oberfläche der Nanoteilchen mit hyperverzweigten Polyethylenimin (bPEI) funktionalisiert. Anschließend wurde die Eignung der gewonnenen magnetodielektrischen Biokomposite als Polymersubstrate in Patchantennen untersucht.

Der Einfluss der komplexer Permeabilität ($\mu^* = \mu' - i\mu''$) und des magnetischen Dämpfungsverlustes $\tan\delta_\mu$ blieb dabei unberücksichtigt, da für den Realteil $\mu' = 1$ gesetzt wird. Im Frequenzbereich zwischen 0,4 bis 4,5 GHz wurden bei den untersuchten Biopolymer-SPIONS aber bereits erhebliche dielektrische Dämpfungsverluste zwischen 0,15 bis 0,4 festgestellt. Zusammen mit dem nicht erfassten magnetischen Dämpfungsverlust ist beim Einsatz dieser hochdämpfenden Polymersubstrate in den Patchantennen eine starke Reduzierung des Antennengewinns und der Strahlungseffizienz zu erwarten.

Der nachfolgend verwendete Begriff der hyperverzweigten Spacermoleküle bezieht sich auf organische Molekülstrukturen von Polymerverbindungen, die eine zufällige, 3-dimensionale räumliche Verzweigung, mit einer Vielzahl funktioneller Gruppen und Nanokavitäten aufweisen sowie ein Pseudozentrum besitzen, weshalb in den gefüllten Polymerverbunden beim Einsatz dieser Moleküle auch eine raumbeanspruchende Funktion (Spacerwirkung) sichtbar ist.

In der nachfolgenden Erfindung werden für das Reaktionsprodukt aus dem hyperverzweigten Polyethylenimin (PEI) nach der Amidierung mit Palmitinsäure $C_{15}H_{31}COOH$ die Bezeichnung PEI-C16 und mit Stearinsäure $C_{17}H_{35}COOH$ PEI-C18 verwendet und als Oberbegriff die Abkürzung PEIA eingeführt. Aufgabe der Erfindung ist die Miniaturisierung von Antennen, z. B. vom Typ Patch-, Dipol- und Planar Inverted F-Antenne (PIFA) für die MHz- und angrenzende GHz-Frequenzregion, zu verbessern.

Die Aufgabe wird durch die Einarbeitung und Anwesenheit hyperverzweigter Spacermoleküle gelöst. Durch diese wird die Brechzahl der eingesetzten Polymersubstrate in einem bestimmten Füllstoffbereich bzw. bei konstantem Füllstoffanteil der magnetischen Komponente bei gleichzeitiger Steigerung von Permittivität $\varepsilon'$ und magnetische Permeabilität $\mu'$ angehoben.

Für die Miniaturisierung der Antennen eingesetzte Polymersubstrate mit der hyperverzweigten Polymerverbindung liegen als magnetodielektrische Polymerkomposite mit einem magnetischen Füllstoff oder als Polymerhybride mit zwei oder mehreren magnetischen Füllstoffkomponenten vor.

Dabei zeichnen sich die magnetodielektrischen Polymersubstrate durch niedrige dielektrische und magnetische Dämpfungsverluste aus, so dass für $\tan\delta_\varepsilon = \varepsilon''/\varepsilon' < 0,1$ und für $\tan\delta_\mu = \mu''/\mu' < 0,1$ erfüllt ist.

Die magnetodielektrischen Polymersubstrate erreichen durch den Zusatz der hyperverzweigten Spacermoleküle wegen $\mu' > 1$ gegenüber rein dielektrisch gefüllten Polymerverbunden mit $\mu' = 1$ eine verbesserte Impedanzanpassung IA, woraus auch geringere Verluste der Antenne durch Oberflächenwellen und Reflexionen resultieren.

Die Aufgabe der Erfindung wird gelöst, indem magnetodielektrische Polymersubstrate mit einer Füllung von Magnetteilchen verwendet werden, welche von amphiphilen hyperverzweigten Spacermolekülen umgeben sind. Dabei lagern sich die Spacermoleküle aufgrund ihrer Amphiphilie mit der polaren Seite an der hochenergetischen Oberfläche der Magnetteilchen an, während sich die unpolaren Molekülbereiche der Spacerverbindung in der unpolaren niederenergetischen Polymermatrix ausbreiten können. Dadurch werden die Magnetteilchen von den hyperverzweigten Spacermolekülen mizellenartig umhüllt und in einer 0-3 Konnektivität zur Matrix eingebaut.

Aufgrund der besseren Dispergierung und Vereinzelung der Magnetteilchen nehmen Permittivität $\varepsilon'$ und magnetische Permeabilität $\mu'$ und somit die Brechzahl des magnetodielektrischen Polymerverbundes zu, während die dielektrischen und magnetischen Dämpfungsverluste auf Werte $\tan\delta_\varepsilon < 0,1$ und $\tan\delta_\mu < 0,1$ abgesenkt sind.

Die eingesetzten Magnetteilchen besitzen weichmagnetische Eigenschaften, wie eine geringe Koerzitivfeldstärke $H_c < 1000$ A/m und eine niedrige Remanenz (Restmagnetisierung), so dass für den Realteil der magnetischen Permeabilität Werte von $\mu' > 1$ bzw. $\mu' \gg 1$ resultieren.

Die weichmagnetischen Magnetteilchen sind Keramiken oder Legierungen, welche die Elemente Cobalt, Eisen, Mangan oder Nickel enthalten. Besonders geeignet für den Einsatz in Polymersubstraten für die Miniaturisierung von Antennen im MHz- und angrenzenden GHz- Frequenzbereich sind Barium-Cobalt-Hexaferrit vom Z-Typ ($Ba_3Co_2Fe_{24}O_{41}$), Nickel-Zink-Ferrit der allgemeinen Formel $Ni_aZn_{(1-a)}Fe_2O_4$ oder Magnetit ($Fe_3O_4$) oder auch Kombinationen dieser Stoffe. Die mittlere Korngröße $d_{50}$ der Teilchen mit weichmagnetischen Eigenschaften liegt im Bereich von 0,05 bis 10,0 $\mu$m.

Die eingesetzten Spacermoleküle sind hyperverzweigte Polyethylenimine, welche zusätzlich mit unpolaren Gruppen funktionalisiert wurden. Hierdurch entstehen amphiphile Substanzen, welche einerseits mit der polaren Oberfläche der Magnetteilchen interagieren können, sich aber andererseits auch in der unpolaren Matrix ausbreiten können. Die Magnetteilchen sind von den hyperverzweigten Spacermolekülen mizellenartig umgeben, wodurch diese in der Matrix gleichmäßiger dispergiert und besser vereinzelt werden.

Die Funktionalisierung der hyperverzweigten Spacermoleküle erfolgt bevorzugt mit Fettsäuren, besonders bevorzugt sind dabei Palmitinsäure und Stearinsäure.

Die Polymermatrix ist die Hauptkomponente des magnetodielekrischen Polymersubstrates in der Antennenkonstruktion. Die Matrix ist für die Festigkeit und Struktur oder auch die Flexibilität des eingesetzten Kunststoffs verantwortlich.

Das Matrixmaterial besteht aus einem unpolaren und niederenergetischen Polymer mit niedriger dielektrischer Dämpfung $\tan\delta_\varepsilon < 0{,}02$ und insbesondere $\tan\delta_\varepsilon < 0{,}01$, z. B. aus Polyolefinen wie cyclischen Olefin Polymer (COP), cyclischen Olefin Copolymer (COC), Polyethylen (PE) und Polypropylen (PP), styrolhaltigen Polymeren, wie Polystyrol (PS), schlagzähmodifizierten Styrol (HIPS) und Acrylnitril-Butadien-Styrol-Copolymer (ABS), Polyoxymethylen (POM), Polyestern wie Polyethylenterephthalat (PET), Polybutylenterephthalat (PBT) und Polyethylennaphthalat (PEN), Polycarbonat (PC), Polyphenylenether (PPO), Polyphenylensulfid (PPS), fluorhaltigen Polymeren wie Polyterafluorethylen (PTFE), Polyvinylidenfluorid (PVDF), Perfluor(ethylen-propylen) (FEP) und Ethylen-Tetrafluorethylen-Copolymer (ETFE), thermoplastischen Elastomeren (TPE) wie Polyetherblockamiden (PEBA), 1-Komponenten Festsilikonelastomeren wie kalt- (RTV) oder heißvernetzenden (HTV) Silikonkautschuken, flüssigen 2-Komponenten Silikonkautschuken (LSR-Liquid Silicone Rubber) wie Polydimethylsiloxan oder aus Ethylen- Propylen-DienKautschuk (EPDM, Ethylen-Propylen-Dien; M-Gruppe), Epoxidharz-Vergussmassen (kalt- oder warmhärtend) oder aus arcylatesterhaltigen Epoxidharzen.

Das erfindungsgemäße Polymerkomposit wird durch Compoundierung mittels Extrusion, oder durch Kneten des thermoplastischen Matrixpolymers oder aus flüssigen Teilchendispersionen des gelösten Polymer unter Beimischung der amphiphilen hyperverzweigten Spacermoleküle und der Magnetteilchen hergestellt. Aus den flüssigen Magnetteilchen-dispersionen des gelösten Polymers wird in einem weiteren Verfahrensschritt der magnetodielektrische Polymerkomposit nach Abtrennung des Lösungsmittels gewonnen. Die Begriffe "Polymersubstrat", "Polymerverbund" und "Polymerkomposit" sind im Zusammenhang der vorliegenden Erfindung gleichbedeutend und austauschbar.

Die magnetisch gefüllten Polymerkomposite werden granuliert und auf einer Spritzgussmaschine zu plattenförmigen Halbzeugen als Polymersubstrat für eine Antenne oder zu Gehäusen für die Aufnahme einer Antennenkonstruktion verarbeitet.

Aus den Granulaten der magnetodielektrischen Polymerkomposite hergestellte Filamente können unter Einsatz des additiven Fertigungsverfahrens Fused Filament Fabrication- (FFF) zu speziellen Halbzeugen verarbeitet werden.

Aus den Filamenten werden Gehäuse für die Aufnahme einer Antenne gedruckt oder die Antennenkonstruktion wird direkt mittels des FFF-Verfahrens mit dem magnetodielektrischen Polymerkomposit umhüllt.

Für die Herstellung des magnetisch gefüllten Polymerkomposits aus 1-K Festsilikonelastomer oder EPDM werden dem Kautschuk amphiphile hyperverzweigte Spacermoleküle und Magnetteilchen im Kneter aufgegeben und die Mischung anschließend auf einem Walzwerk verarbeitet. Die magnetisch gefüllte Kautschukmischung wird zu plattenförmigen Halbzeugen verpresst, welches als Polymersubstrat für die Miniaturisierung einer Antenne eingesetzt werden kann.

In flüssige 2-K Silikonelastomere oder auch Epoxidharzmischungen werden Magnetteilchen und amphiphile hyperverzweigte Spacermoleküle durch eine kombinierte Behandlung von Hochgeschwindigkeitshomogenisierung und Ultraschall eindispergiert.

Die flüssigen Matrix-Magnetteilchen-Dispersionen können in Kavitäten gegossen und zu plattenförmigen Halbzeugen ausgehärtet werden, die anschließend als Polymersubstrate in der Antennenkonstruktion zum Einsatz kommen. Flüssige Matrix-Magnetteilchen-Dispersionen lassen sich mittels Verguss auch zur Umhüllung einer Antenne einsetzen, was dann die Miniaturisierung der Antennenkonstruktion ermöglicht.

Granulate der magnetodielektrischen Polymerkomposite und -hybride können auf einem Zweischneckenextruder durch Compoundierung von Polymeren mit ferritischen Füllstoffen, nach Strangabzug der Schmelze durch ein Wasserbad und Stranggranulierung gewonnen werden. Anschließend werden die Granulate auf einer Spritzgussmaschine zu plattenförmigen Halbzeugen verspritzt.

Die Herstellung des amidierten Polyethylenimins (PEIA) wie PEI-C16 und PEI-C18 wird in der Arbeit von Gladitz "Untersuchungen zur Herstellung, Charakterisierung und Applikation von antimikrobiellen Metall-Hybriden für Beschichtungen und Compounds", Dissertation an der Martin-Luther-Universität Halle-Wittenberg vom 12.03.2015 beschrieben.

Die PEIA-Komponente wird während der Compoundierung im Extruder den Polymerschmelzen zudosiert. PEIA wurde ebenfalls in einer acetonischen Polymerlösung zusammen mit den magnetischen Ferritpartikeln in die Polymer-Ferrit-Dispersionen unter Scherung eingearbeitet und dann unter Vakuum getrocknet.

Nach Abdampfen des organischen Lösungsmittels und Granulierung des folienartigen Rückstands kann das magnetisch gefüllte Polymermaterial zu plattenförmigen Halbzeugen verspritzt werden.

Ein weiteres Polymerkomposit mit einem Ferritfüllstoff und amidiertem Polyesterimin kann auf einer Katheterextrusionsanlage zu einem Filament von 1,75 mm Dicke verarbeitet und anschließend zu plattenförmigen Halbzeugen verdruckt und auch zur Umhüllung einer Dipolantenne mittels Fused Filament Fabrication (FFF) eingesetzt werden.

Polymerzusätze bestehend aus polyhedrischen Oligosilsesquioxanen Octametyl-POSS (OMP) und Trisilano-Iisobutyl-POSS (TSP) und des amphiphilen Copolymers Tegomer P121 für Dispersionen von Polymer-Füllstoff-Konzentraten basierend auf einem Hartwachs werden als Referenzadditive mit dem amidierten Polyethylenimin (PEIA) in den magnetodielektrischen Polymer-Ferrit-Verbunden verglichen. Permittivität $\varepsilon'$ und magnetische Permeabilität $\mu'$ und somit die Brechzahl n der Polymerverbunde können lediglich bei Verwendung des amphiphil modifizierten und hyperverzweigten PEIA mit hinreichend kleinen Dämpfungsverlusten $\tan\delta_\varepsilon < 0{,}1$ und $\tan\delta_\mu < 0{,}1$ angehoben werden.

Bevorzugte Anwendungsformen

Magnetodielektrische Polymerkomposite und -hybride können unter der Voraussetzung niedriger dielektrischer und magnetischer Dämpfungsverlusten $\tan\delta_\varepsilon = \varepsilon''/\varepsilon' < 0{,}1$ und $\tan\delta_\mu = \mu''/\mu' < 0{,}1$ als Substratmaterialien für die Miniaturisierung von Antennen im MHz- und angrenzenden GHz-Bereich eingesetzt werden.

Das amphiphile hyperverzweigte Polymer PEIA fungiert bei der Verarbeitung der magnetodielektrischen Verbunde mittels Extrusion oder bei der Einarbeitung in flüssige Polymer-Ferritteilchen-Dispersionen als Dispergierhilfsmittel und im Gegensatz zu den betrachteten Referenzadditiven OMP, TSP und P121 auch als wirksames Spacermolekül zwischen den magnetischen Füllstoffteilchen im Polymerverbund.

Da sowohl die Permittivität $\varepsilon'$ als auch die magnetische Permeabilität $\mu'$ der magnetodielektrischen Polymerkomposite und -hybride mit der PEIA-Komponente zunehmen, wird die Brechzahl merklich angehoben, was z. B. für eine zusätzliche Miniaturisierung der Antennenstrukturen oder auch zur Einsparung des magnetischen Füllstoffes bei gleichzeitiger Absenkung der Dämpfungsverluste nutzbar ist.

Als mögliche Arbeitsfrequenzen für die vorliegenden magnetodielektrischen Polymerverbunde mit der Spacerverbindung PEIA in einer miniaturisierten Antenne werden die speziellen Bereiche von 400 MHz für Notruffrequenzen und 800 MHz für den Mobilfunkstandard LTE (Long Term Evolution) / 4G bzw. der untere 5G-Bereich von 700 bis 900 MHz genutzt, aber auch ein größerer Frequenzbereich von 50 MHz bis 4 GHz für die Polymersubstrate favorisiert.

Beschreibung der Abbildungen

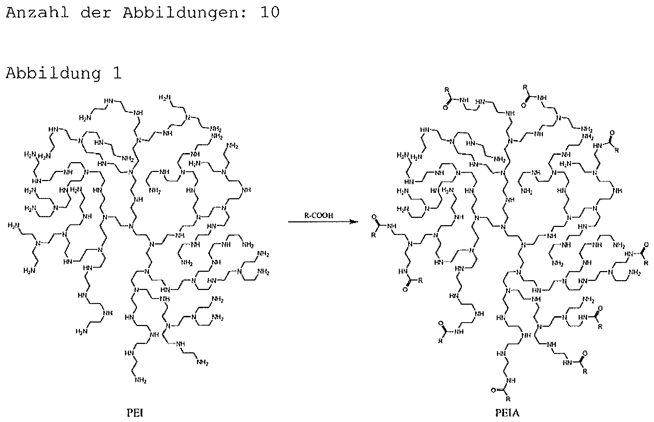

Abbildung 1 zeigt das hyperverzweigte PEI und die Modifizierung mittels Fettsäuren der allgemeinen Formel R-COOH, wodurch ein amphiphiles hyperverzweigtes PEI (PEIA) erhalten wird.

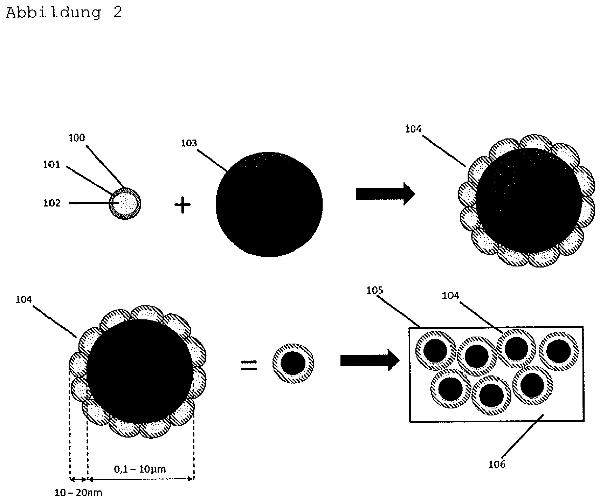

Abbildung 2 zeigt schematisch die Interaktion von PEIA (100), bestehend aus einem unpolaren Bereich (101) und einem polaren Bereich (102), mit dem Magnetteilchen (103), wodurch ein mit PEIA umhülltes Magnetteilchen (104) entsteht. In einem Polymerverbund (105) aus mit PEIA umhüllten Magnetteilchen (104) und Matrixpolymer (106) kommt es durch die Umhüllung zu einer Vereinzelung der Magnetteilchen.

In Abbildung 3 werden Permittivität $\varepsilon'$, magnetische Permeabilität $\mu'$ und die Brechzahl von COC-Hexaferrit-Kompositen ohne zusätzliches Additiv, mit OMP und mit der PEIA-Spacerverbindung am Beispiel der praktisch relevanten Frequenzen von 400 und 800 MHz miteinander verglichen.

In Abbildung 4 werden Permittivität $\varepsilon'$, magnetische Permeabilität $\mu'$ und die Brechzahl von ABS-Spinellferrit-Kompositen ohne zusätzliches Additiv, mit den POSS-Zusätzen OMP und TSP und mit der PEIA-Verbindung bei 400 und 800 MHz miteinander verglichen.

In Abbildung 5 werden dielektrische und magnetische Dämpfungsverluste von ABS-Spinellferrit-Kompositen ohne zusätzliches Additiv, mit den POSS-Zusätzen OMP und TSP und mit der PEIA-Verbindung am Beispiel der Frequenz von 800 MHz gegenübergestellt.

Abbildung 6 zeigt die Zunahme von Permittivität $\varepsilon'$, magnetischer Permeabilität $\mu'$ und der Brechzahl von Hybriden aus ABS-Magnetit-Hexaferrit und ABS-Spinell-Hexaferrit beim Einsatz der PEIA-Spacerverbindung bei 400 und 800 MHz.

Abbildung 7 zeigt den Versuchsaufbau zur Bestimmung der Resonanzfrequenzverschiebung durch das umgebende magnetodielektrische Material an einem flachen Antennendipol. Der flache Antennendipol (700) wird von zwei Seiten von der magnetodielektrischen Substratschicht (701) eingebettet. Die S11-Streuparametermessung erfolgt über Port1 (702) des Netzwerkanalysators (703).

Abbildung 8 zeigt die Resonanzfrequenzverschiebung einer Dipolantenne von 9,4 cm Länge in unterschiedlicher magnetdielektrischer Umgebung als Funktion von Frequenz und Brechzahl.

(800) Antenne in Umgebung Luft
(802) Antenne mit ABS
(802) Antenne mit Komposit ABS-65gFi130
(803) Antenne mit Komposit ABS-65gFi130-2OMP
(804) Antenne mit Komposit ABS-65gFi130-2TSP

(805) Antenne mit Komposit ABS-65gFi130-2PEIA

In Abbildung 9 wird die Resonanzfrequenzverschiebung einer Antennenstruktur mit zwei Dipolen nach Umhüllen mittels 3D-Druckverfahren mit dem magnetodielektrischen Polymerkomposit UBE-65gFi130-2PEIA und der amphiphil modifizierten Polyesteriminkomponente, vor dem Umhüllen im Dielektrikum Luft (900) und nach Aufbringen des Polymersubstrates (901) dargestellt. In Abbildung 10 werden Fotos der Antennenstruktur vor dem Umhüllen (1000) und nach Aufbringen des magnetodielektrischen Polymerkomposites UBE-65gFi130-2PEIA (1001) gezeigt.

**Beispiele**

Methoden

Am Impedanzanalysator Agilent E4991A wurden die komplexe magnetische Permeabilität $\mu^*$ ($\mu'$, $\mu''$ bzw. $\tan\delta_\mu$) und die komplexe Permittivität $\varepsilon^*$ ($\varepsilon'$, $\varepsilon''$ bzw. $\tan\delta_\varepsilon$) mittels der Messfassungen 16454A und 16453A im Frequenzbereich zwischen 10 MHz bis 1 GHz bestimmt. Die komplexe magnetische Permeabilität $\mu^*$ wurde dabei frequenzabhängig an 2 mm dicken Lochscheiben mit einem Außendurchmesser von 19 mm und Innendurchmesser von 6 mm und die komplexe Permittivität $\varepsilon^*$ an 2 mm dicken Ronden mit einem Durchmesser von 19 mm gemessen, die aus den magnetodielektrischen Polymerkompositen und -hybriden mittels Fräsen entnommen wurden.

Chemikalien

APEL™ APL5014DP ist ein cyclisches Olefin Copolymer von Mitsu Chemicals America, Inc., mit einem MFI von 36 g/10min 260°C/2,16 kg, gemessen nach ASTM D1238.

ELIX ABS 3D GP ist ein Acrylnitril-Butadien-Styrol-Copolymer von ELIX Polymers, Tarragona, mit einer MVR 18 cm$^3$/10min 220°C/10 kg, bestimmt nach ISO 1133.

UBE68 UBESTA XPA 9068X1 ist ein Polyamid 12-Elastomer von UBE Industries, Ltd. Japan, mit einer MFR von 4 g/10 min 190°C/2,16 kg, bestimmt nach ISO 1133-2.

$Co_2Z$ ist ein Hexaferrit vom Z-Typ $Ba_3Co_2Fe_{24}O_{41}$ mit $d_{50}$~5,1 $\mu$m von Trans-Tech.

gFi130 ist ein NiZn-Ferrit des Typs Ferrocarit der Sumida AG mit einem $d_{50}$~0,7 um nach der Vermahlung.

$Fe_3O_4$ ist ein Magnetit E8707H der Fa. Lanxess mit einem $d_{mittel}$~0,2 $\mu$m.

Octamethyl-Polyoligosilsesquioxanes (Octametyl-POSS, OMP) und Trisilanolisobutyl-Polyoligosilsesquioxanes (Trisilanolisobutyl-POSS, TSP) wurden von Hybrid Plastics, Hattiesburg bezogen.

Das Dispersionsadditiv Tegomer® P121 ist ein amphiphiles Copolymer d. Fa. Evonik Nutrition & Care GmbH.

PEIA ist ein amidiertes Polyethylenimin. Die Herstellung wird in der Arbeit von Gladitz "Untersuchungen zur Herstellung, Charakterisierung und Applikation von antimikrobiellen Metall-Hybriden für Beschichtungen und Compounds", Dissertation an der Martin-Luther-Universität Halle-Wittenberg vom 12.03.2015 beschrieben.

Verwendete Polymere, magnetische Füllstoffe und spezielle Additive und die detaillierten Verarbeitungsbedingungen der magnetodielektrischen Polymerverbunde sind in Tabelle 1 aufgeführt.

Tabelle 1: Zur Herstellung der magnetodielektrischen Polymerverbunde verwendete Polymere, magnetische Füllstoffe, spezielle Zusätze und Verarbeitungsbedingungen

| Kurzbezeichnung | Polymer-matrix | Magnetische Füllstoffe u. Füllgrade | ' Spezielle Zusätze (2%) | Verarbeitung |
|---|---|---|---|---|
| COC | APEL™ APL5014DP | $Co_2Z$: 60 u. 65% | OMP, PEIA | Extrusion: 240-260°C Spritzguss: 230-240°C |
| ABS | ELIX ABS 3D GP | gFi130: 65 u. 69% $Co_2Z/Fe_3O_4$: 55%/10% $Co_2Z$/gFi130: 59%/10% | OMP, TSP, P121, PEIA | Extrusion: 215-240°C Spritzguss: 215-240°C |

(fortgesetzt)

| Kurzbezeichnung | Polymer-matrix | Magnetische Füllstoffe u. Füllgrade | ' Spezielle Zusätze (2%) | Verarbeitung |
|---|---|---|---|---|
| ABS | ELIX ABS 3D GP | gFi130: 65% | PEIA | Acetonische ABS-Ferrit-Dispersionen: Vordispergierung mit Ultraturrax (15 min) u. kombiniert mit Ultraturrax u. im Ultraschallbad (30 min) . Spritzguss: 240°C |
| UBE68 | UBESTA XPA nat. 9068X1 | gFi130: 65% | PEIA | Extrusion: 200-220°C Filamentherstellung: D=1,75mm, 200-210°C, 3D-Druck (Fused Filament Fabrication): 210°C |

In den aufgeführten Beispielen wurde das Polyethylenimin Lupasol® WF der Fa. BASF mit einem mittleren Molekulargewicht von 25.000, Wassergehalt von maximal 1% und einer Viskosität (50°C) von 13000-18000 mPa·s eingesetzt und anschließend mit Palmitinsäure der Fa. Roth mit einem Schmelzpunkt von 62,5°C und einem Molekulargewicht von 256,4 g/mol amidiert.

Beispiel 1

In cyclisches Olefin Copolymer APELTM APL5014DP wurden mittels Extrusion 60 und 65 Ma% des Hexaferrits $Co_2Z$ ($Ba_3Co_2Fe_{24}O_{41}$) und jeweils 2% pulverförmiges PEIA eingearbeitet.

Bei zwei Einstellungen mit 60 und 65 Ma% des Hexaferrits $Co_2Z$ wurden zum Vergleich kein PEIA und bei zwei weiteren entsprechenden Rezepturen 2 % der POSS-Verbindung OMP in die COC-Matrix per Extrusion eingebracht.

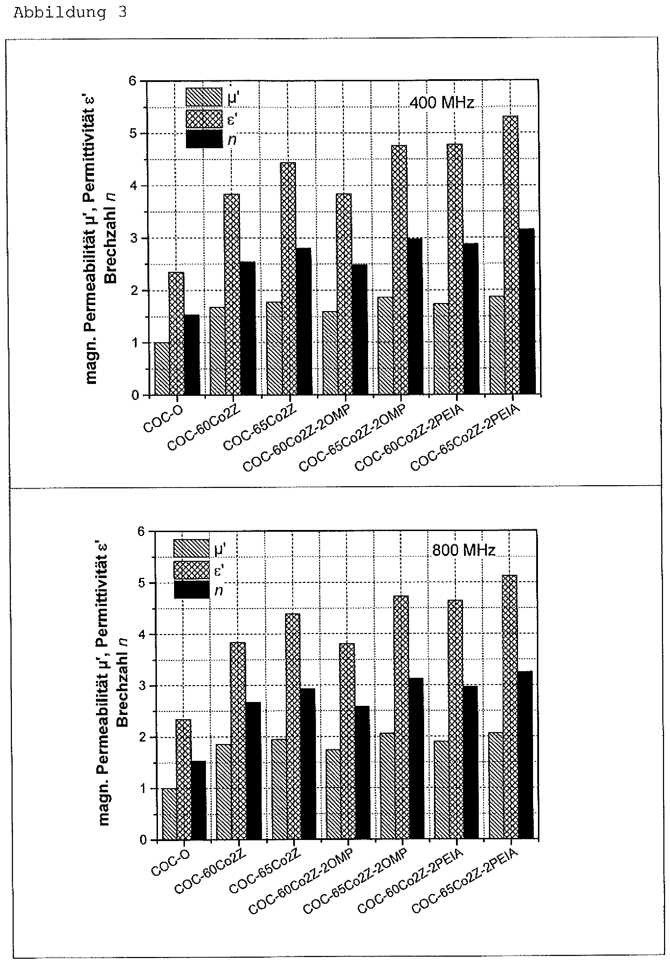

Die Zunahme der Permittivität $\varepsilon$' und der magnetischen Permeabilität $\mu$' und die daraus resultierende höhere Brechzahl der magnetodielektrischen Polymerkomposite mit dem amidierten Polyethylenimin (PEIA) gegenüber den Versuchseinstellungen ohne PEIA und mit der POSS-Verbindung OMP wird anhand Abbildung 3 sowohl bei 400 MHz als auch bei 800 MHz nachgewiesen.

Beispiel 2

In das Polymer ELIX ABS 3D GP wurden per extrusiver Verarbeitung 65 und 69 Ma% des fein gemahlenen Spinellferrits gFi130 ($NiZn-Fe_2O_4$) und jeweils 2% pulverförmiges PEIA eingebracht.

Bei zwei Einstellungen mit 65 und 69 Ma% des Spinellferrits gFi130 wurden zum Vergleich kein PEIA und bei zwei Rezepturen mit 65 Ma% gFi130 jeweils 2 % der POSS-Verbindungen OMP und TSP und bei einer weiteren Referenzeinstellung 2% des Dispersionsadditivs Tegomer P121 eingearbeitet.

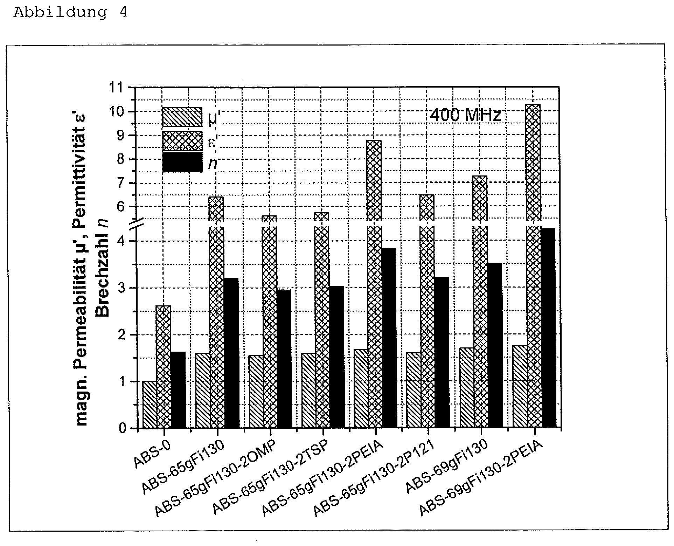

Eine stärkere Zunahme der Permittivität $\varepsilon$' und der magnetischen Permeabilität $\mu$' und die daraus resultierende höhere Brechzahl der magnetodielektrischen Polymerkomposite beim Einsatz des amidierten Polyethylenimins (PEIA) gegenüber den Versuchseinstellungen ohne PEIA und mit den POSS-Verbindungen OMP und TSP sowie bei Verwendung des Dispersionsadditivs Tegomer P121 wird in Abbildung 4 bei 400 MHz und auch bei 800 MHz sichtbar.

Beispiel 3

Zum Vergleich der dielektrischen und magnetischen Dämpfungsverluste wurden mittels Extrusion 60, 65 und 69 Ma% des fein gemahlenen Spinellferrits gFi130 ($NiZn-Fe_2O_4$) ohne PEIA in das Polymer ELIX ABS 3D GP eingearbeitet.

In weitere Einstellungen mit 65 Ma% des Spinellferrits gFi130 wurden 2 Ma% der POSS-Verbindungen OMP und TSP und in eine Rezeptur mit 65 Ma% gFi130 auch 2 % des Dispersionsadditivs Tegomer P121 als Referenzeinstellungen per Extrusion eingebracht.

Die dielektrischen und magnetischen Dämpfungsverluste dieser Referenzproben wurden anschließend mit entsprechenden Verlusttangenswerten extrudierter ABS-Ferrit-Komposite bei 65 und 69 Ma% Füllgrad des Spinellferrits gFi130 mit jeweils 2 Ma% der PEIA-Komponente verglichen.

Durch die bessere Dispergierung und Spacerwirkung des amidierten Polyethylenimins verringern sich insbesondere die dielektrischen Dämpfungsverluste der Einstellungen ABS-65gFi130-2PEIA und ABS-69gFil30-2PEIA gegenüber den Rezepturen ohne PEIA um 25,8 bzw. 51,5%.

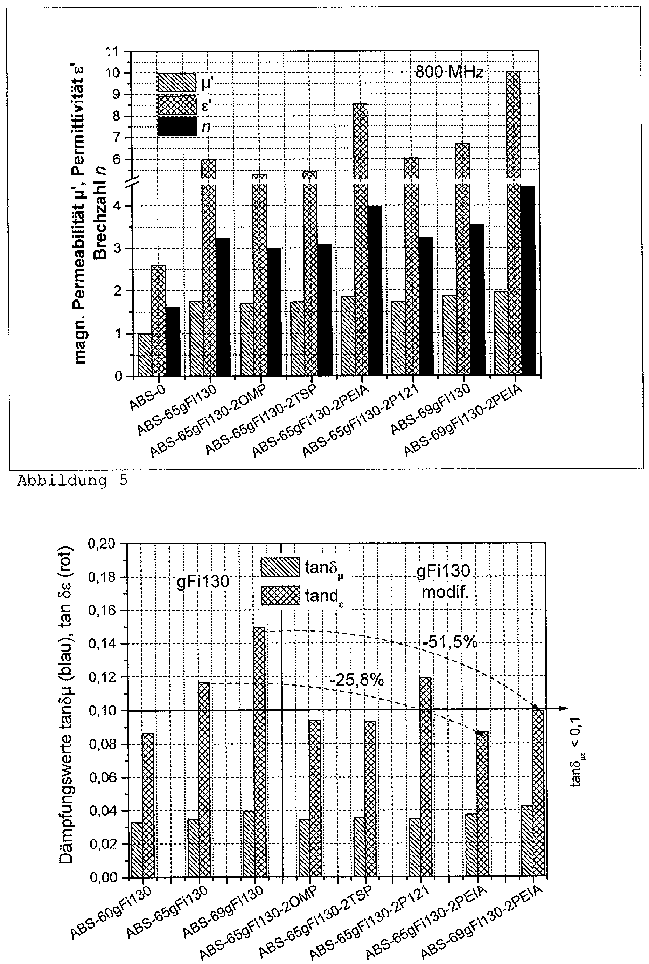

Entsprechend Abbildung 5 werden beim Einsatz des PEIA gegenüber den ABS-Ferrit-Kompositen mit den POSS-Verbindungen OMP und TSP und auch bei Verwendung des Dispersionsadditivs Tegomer P121 stets niedrigere dielektrische Dämpfungsverluste erreicht. Bei den ABS-gFi130-Kompositen mit 65 und 69 Ma% Ferrit und 2 Ma% PEIA ist sowohl bei 400 als auch bei 800 MHz für die dielektrischen und magnetischen Dämpfungsverluste $\tan\delta_\varepsilon = \varepsilon''/\varepsilon' < 0,1$ und $\tan\delta_\mu = \mu''/\mu' < 0,1$ erfüllt.

Beispiel 4

In flüssige acetonische ABS-Ferrit-Teilchendispersionen wurde PEIA eingebracht, wobei die Dispersionen durch eine kombinierte Behandlung mittels Ultraturrax und Ultraschall entsprechend Tabelle 1 stark geschert wurden. Nach Abtrennung des Acetons unter Vakuum und Zerkleinerung des folienförmigen Rückstandes des ABS-Ferrit-Komposites wurden plattenförmige Halbzeuge verspritzt.

In Tabelle 2 werden Permittivität $\varepsilon'$ und magnetische Permeabilität $\mu'$ und Dämpfungsverluste $\tan\delta_\varepsilon$ und $\tan\delta_\mu$ gefüllter ABS-gFi130-Komposite bei 800 MHz miteinander verglichen, die per Schmelzecompoundierung und durch den Dispersionsprozess von Ferrit in acetonischer ABS-Lösung gewonnen wurden.

ABS-Ferrit-Komposite aus dem Dispersionsprozess weisen in den Realteilen von Permittivität $\varepsilon'$ und magnetischer Permeabilität $\mu'$ merklich niedrigere Werte als die ABS-Ferrit-Einstellungen aus der klassischen Schmelzecompoundierung auf.

Die Absenkung von $\varepsilon'$ und p' steht mit der Verringerung der Dichte der im Dispersionsverfahren hergestellten ABS-Ferrit-Komposite im Zusammenhang.

Ursache für die Reduzierung der Permittivität $\varepsilon'$ und der magnetischen Permeabilität $\mu'$ dieser ABS-Ferrit-Verbunde sind Hohlräume, die durch verdampfende Lösungsmittelreste des Acetons bei der Spritzgussverarbeitung der Komposite gebildet wurden.

Beim Einsatz der PEIA-Komponente in die acetonischen ABS-Ferrit-Dispersionen nehmen aber Permittivität $\varepsilon'$, magnetische Permeabilität $\mu'$ und Brechzahl n gegenüber den Kompositen ohne PEIA gleichzeitig zu.

Interessant ist insbesondere die Verringerung der dielektrischen und magnetischen Dämpfungsverluste durch den Einbau von Mikroporen in die hochgefüllte ABS-Ferrit-Verbundstruktur. In Anwesenheit der Spacerverbindung PEIA werden die Verlusttangenswerte noch zusätzlich abgesenkt.

Tabelle 2:

| Permittivität, magnetische Permeabilität und Verlusttangens, Brechzahl n und Dichte $\rho$ der Polymerkomposite in Abhängigkeit vom Herstellungsverfahren bei 800 MHz Herstellung durch Schmelzecompoundierung | | | | | |
|---|---|---|---|---|---|
| | $\mu'$ | $\tan\delta_\mu$ | $\varepsilon'$ | $\tan\delta_\varepsilon$ | $n$ $\rho$ |
| ABS-65gFi130 | 1,748 | 0,0347 | 5, 972 | 0,1168 | 3,231 *2,136* |
| ABS-65gFi130-2PEIA | 1,848 | 0,0373 | 8,553 | 0, 0867 | 3, 976 2,143 |
| Herstellung aus flüssiger ABS-Ferritteilchen-Dispersion | | | | | |
| ABS-65gFi130, Disp. | 1,607 | 0,0259 | 5,805 | 0,072 | 3,054 2,025 |
| ABS-65gFi130-2PEIA, Disp. | 1,617 | 0,0258 | 5, 92 | 0,0647 | 3,094 *2,057* |

Beispiel 5

Zur Verbesserung der Partikelverteilung und der Mischungsgüte der magnetischen Teilchen im Polymerverbund wurde eine zweite magnetische Komponente eingesetzt, um die Brechzahl, die Permittivität e' und/oder magnetische Permeabilität $\mu'$ des magnetodielektrischen Polymersystems zu erhöhen. Für die Füllgrade $c_1$ der primären magnetischen Komponente zur sekundären Komponente $c_2$ gilt $c_1 > c_2$.

Der Größenunterschied des mittleren Durchmessers $d_1$ des primären magnetischen Füllstoffs zum mittleren Durchmesser der sekundären Komponente $d_2$ soll dabei die Bedingung $d_1 \gg d_2$ bzw. $d_1 > d_2$ erfüllen.

Nachfolgend werden Permittivität $\varepsilon'$ und magnetische Permeabilität $\mu'$ sowie die Brechzahl n der ternären magnetisch gefüllten Polymerhybride ohne und nach Zusatz der Spacerverbindung PEIA bei 400 und 800 MHz mitein-

ander verglichen.

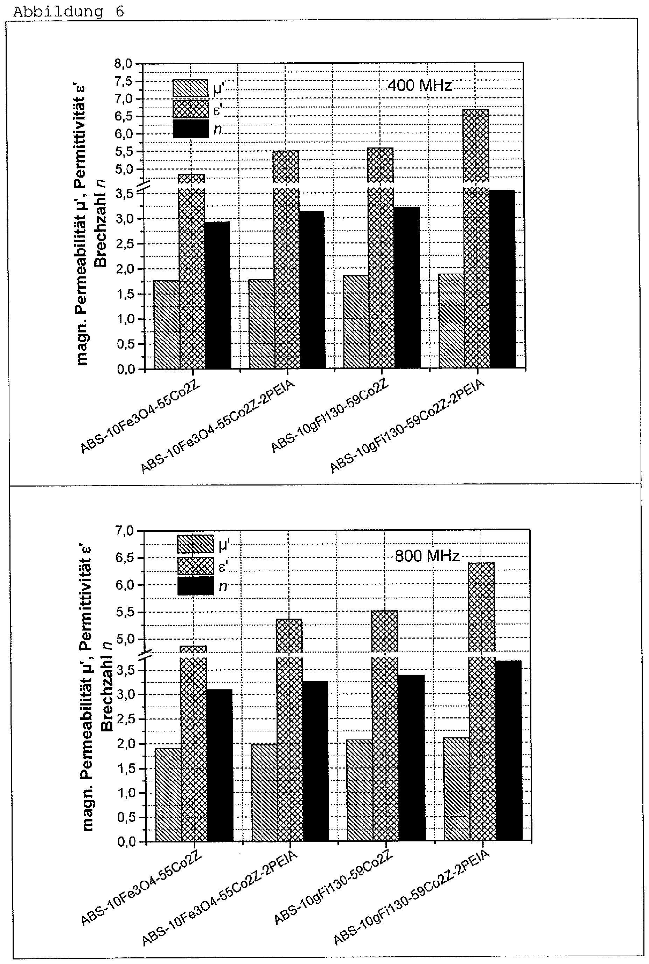

Permittivität $\varepsilon'$ und magnetische Permeabilität $\mu'$ der Hybride ABS-10Fe$_3$O$_4$-55Co$_2$Z und ABS-10gFi130-59Co$_2$Z in Abbildung 6 nehmen durch den Zusatz des PEIA merklich zu, was entsprechend Gl.1 die Brechzahl erhöht und dadurch den Miniaturisierungsfaktor einer Antenne mit dem magnetodielektrischen Substrat verkleinert.

Für die dielektrischen und magnetischen Dämpfungsverluste der Hybride mit der PEIA-Komponente ist sowohl bei 400 als auch bei 800 MHz $\tan\delta_\varepsilon = \varepsilon''/\varepsilon' < 0,1$ und $\tan\delta_\mu = \mu''/\mu' < 0,1$ erfüllt.

Beispiel 6

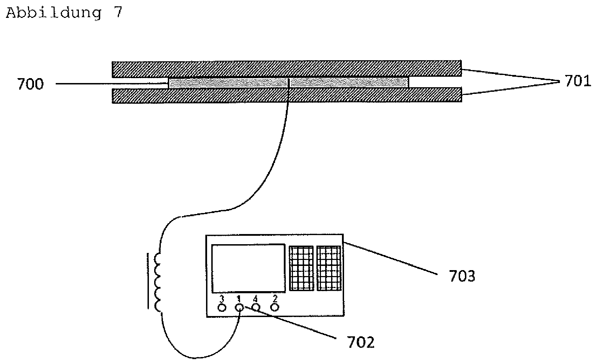

Um eine Dipolantenne von 9,4 cm Länge mit einer Resonanzfrequenz von 1335 MHz an Luft wurden bei der S11-Streuparametermessung (Rückflussdämpfung) am Netzwerkanalysator ZVB14 jeweils 2 mm dicke Schichten gespritzter Platten aus reinem ABS, ABS-65gFi130 ohne Additiv, ABS-65gFi130-2OMP und ABS-65gFi130-2TSP mit zwei unterschiedlichen POSS-Verbindungen sowie aus ABS-65gFi130-2PEIA mit dem PEIA-Spaceradditiv symmetrisch angeordnet. Der verwendete Versuchsaufbau ist in Abbildung 7 dargestellt.

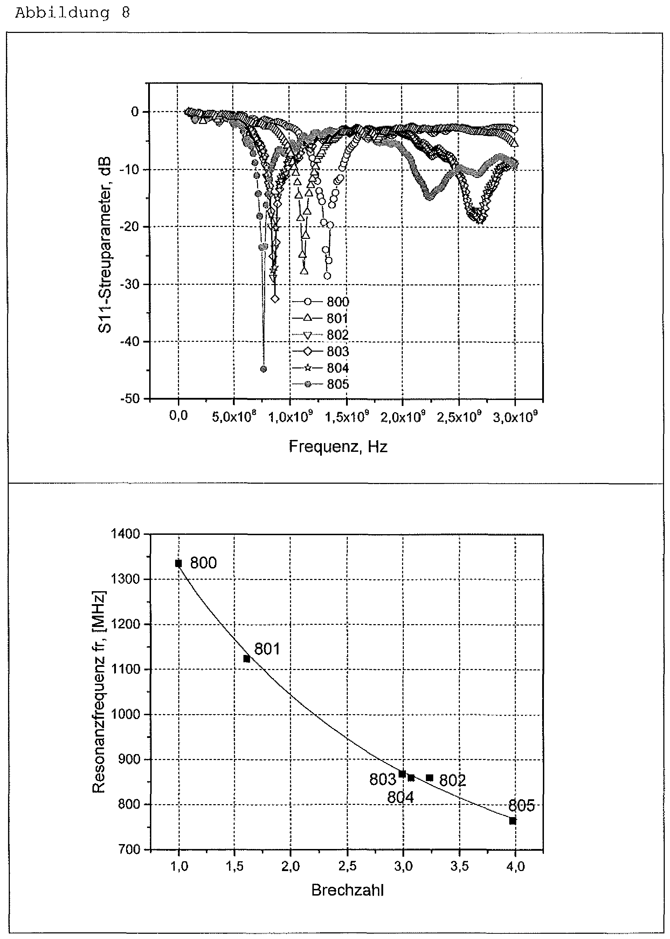

Die Verschiebung der Resonanzfrequenz $f_r$ der Dipolantenne ist in Abhängigkeit vom gewählten Polymersubstrat in Abbildung 8 als Funktion von Frequenz und Brechzahl dargestellt.

Die Dipolantenne mit der Probe ABS-65gFi130-2PEIA (805) mit der PEIA-Komponente zeigt sowohl gegenüber der Umgebung Luft (800) als auch beim Vergleich mit den Proben ABS (801), ABS-65gFi130 (802) ohne Additiv, ABS-65gFi130-2OMP (803) und ABS-65gFi130-2TSP (804) mit den POSS-Verbindungen die größte Resonanzfrequenzverschiebung.

Die Verschiebung der Resonanzfrequenz in den niederfrequenten Bereich der Dipolantenne korreliert mit der Brechzahl der untersuchten Polymerverbunde, weshalb beim Einsatz von Probe ABS-65gFi130-2PEIA(805) als Antennensubstrat mit der höchsten Brechzahl entsprechend Gl. 1 der kleinste Miniaturisierungsfaktor resultiert.

Beispiel 7

Eine Antennenstruktur mit zwei Dipolen von 10,7 und 5,5 mm Länge und Resonanzfrequenzen von 1158 und 2022 MHz an Luft wurde mit einem Polyamidelastomer-Komposit bestehend aus der Matrix UBE68, Ferritfüllstoff gFi130 und PEIA-Additiv unter Einsatz des 3D-Druckverfahrens Fused Filament Fabrication (FFF) umhüllt. Für den 3D-Druck wurde aus dem magnetodielektrischen Polymerkomposit UBE68-65gFi130-2PEIA mit 65 Ma% Spinellferrit und 2 Ma% PEIA ein Filament von 1,75 mm Durchmesser gefertigt. Die Materialstärke der gedruckten Schicht auf der Antennenstruktur betrug je Seite 3 mm.

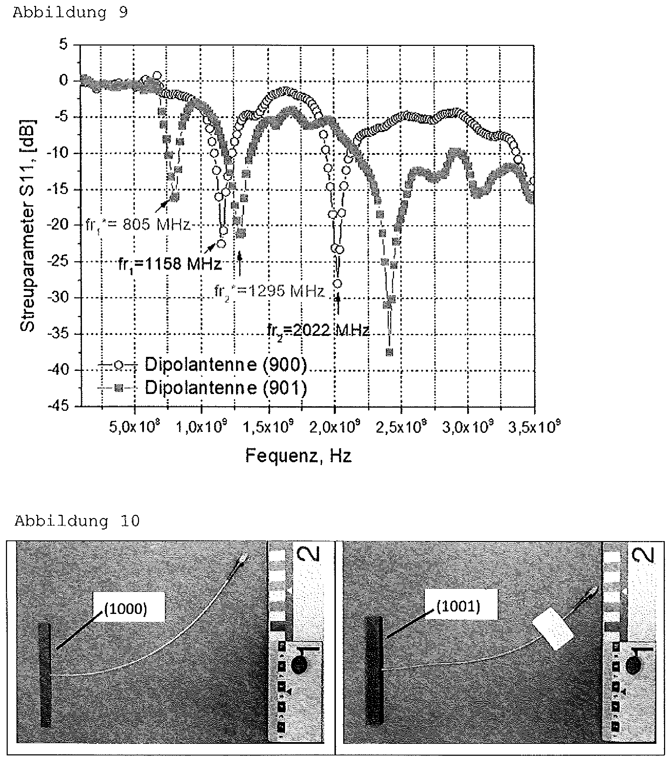

Anhand Abbildung 9 wird ersichtlich, dass durch beidseitiges Umdrucken der Antennenstruktur mit dem Polymerkomposit UBE68-65gFi130-2PEIA die ursprünglichen Resonanzfrequenzen bei 1158 und 2022 MHz (900) in einen Bereich von 805 und 1295 MHz (901)verschoben werden, was einer Reduzierung der Baugröße mit $f_{r1}^*/f_{r1}$ = 805 / 1158 - 0,69 und $f_{r2}^*/f_{r2}$ = 1295 / 2022 - 0,64 von 31 u. 36% entspricht.

**Patentansprüche**

1. Magnetodielektrisches Polymerkomposit mit einer Matrix aus einem oder mehreren unpolaren Polymer(en) in der Teilchen mit weichmagnetischen Eigenschaften und einer mittleren Korngröße $d_{50}$ von 0,05 bis 10 um dispergiert sind, **dadurch gekennzeichnet, dass** das die Teilchen mit weichmagnetischen Eigenschaften von amphiphilen hyperverzweigten Spacermolekülen umgeben sind, so dass das magnetodielektrische Polymersubstrat einen dielektrischen Dämpfungsverlust $\tan\delta_\varepsilon$ von weniger als 0,1, einen magnetischen Dämpfungsverlust $\tan\delta_\mu$ von weniger als 0,1 und eine im Vergleich zu einem magnetodielektrischen Polymerkomposit ohne amphiphile hyperverzweigte Spacermoleküle erhöhte Brechzahl n aufweist, wobei die Brechzahl n definiert ist als:

$$n = \sqrt{\varepsilon' \cdot \mu'} \qquad\qquad\text{Gl. 1}$$

wobei $\varepsilon'$ für die Permittivität und $\mu'$ für die magnetische Permeabilität des magnetodielektrischen Polymerkomposits steht.

2. Magnetodielektrisches Polymerkomposit nach Anspruch 1, **dadurch gekennzeichnet, dass** die Teilchen mit weichmagnetischen Eigenschaften Keramik- oder MetalloxidVerbindungen umfassen, welche die Elemente Cobalt, Eisen, Mangan und/oder Nickel enthalten, wobei Teilchen aus Cobalthexaferrit vom Z-Typ der Formel Ba$_3$Co$_2$Fe$_{24}$O$_{41}$, Nickel-zink-ferrit der allgemeinen Formel Ni$_a$Zn$_{(1-a)}$Fe$_2$O$_4$ und/oder Magnetit (Fe$_3$O$_4$) bevorzugt sind.

3. Magnetodielektrisches Polymerkomposit nach Anspruch 1, **dadurch gekennzeichnet, dass** die Teilchen mit weichmagnetischen Eigenschaften mikroskalige/submikrone Spinellferrite vom Typ NiZn-Ferrite mit einer mittleren Korngröße $d_{50}$ von 0,1 bis 10,0 $\mu$m oder mikroskalige/submikrone Hexaferrite vom $Co_2Z$-Typ der Formel $Ba_3Co_2Fe_{24}O_{41}$ mit einer mittleren Korngröße $d_{50}$ von 0,1 bis 10,0 $\mu$m oder ein submikrones/nanoskaliges Magnetit der Formel $Fe_3O_4$ mit einer mittleren Korngröße $d_{50}$ von 0,05 bis 10,0 $\mu$m sind.

4. Magnetodielektrisches Polymerkomposit nach Anspruch 3, **dadurch gekennzeichnet, dass** die Teilchen mit weichmagnetischen Eigenschaften eine Mischung verschiedene Zusammensetzung und verschiedene mittlere Korngröße $d_{50}$ aufweisen, wobei sich die mittlere Korngröße $d_{50}$ der Teilchen mit jeweils gleicher Zusammensetzung um mindestens 1 $\mu$m, bevorzugt mindestens 2 $\mu$m, besonders bevorzugt mindestens 3 um von denen anderer Zusammensetzung unterscheidet.

5. Magnetodielektrisches Polymerkomposit nach einem oder mehreren der Ansprüche 1 bis 4, **dadurch gekennzeichnet, dass** die amphiphilen hyperverzweigten Spacermoleküle mit unpolaren Gruppen funktionalisierte Polyethylenimine sind, wobei die unpolaren Gruppen bevorzugt Acylgruppen der Formel -CO-$C_nH_{2n+1}$ mit $n \geq 6$ sind, bevorzugt Hexadecanoylgruppen mit n = 16 oder Octadecanoylgruppen mit n = 18, die mit primären Aminogruppen des Polyethylenimins eine Amidbindung bilden.

6. Magnetodielektrisches Polymerkomposit nach einem oder mehreren der Ansprüche 1 bis 5, **dadurch gekennzeichnet, dass** die Polymermatrix ein oder mehrere unpolare Polymer(e) mit einer dielektrischen Dämpfung tan $\delta_\varepsilon$ < 0,02, bevorzugt tan $\delta_\varepsilon$ < 0,01 umfasst.

7. Magnetodielektrisches Polymerkomposit nach einem oder mehreren der Ansprüche 1 bis 6, **dadurch gekennzeichnet, dass** die unpolaren Polymere der Matrix Polyolefine, bevorzugt cyclische Olefinpolymere (COP), cyclische Olefin-Copolymere (COC), Polyethylen (PE), Polypropylen (PP), styrolhaltige Polymere, bevorzugt Polystyrol (PS), schlagzäh-modifiziertes Polystyrol (High Impact Polystyrene, HIPS) und Acrylnitril-Butadien-Styrol-Copolymere (ABS), Polyoxymethylen (POM), Polyester, bevorzugt Polyethylenterephthalat (PET), Polybutylenterephthalat (PBT) und Polyethylennaphthalat (PEN), Polycarbonat (PC), Polyphenylenether (PPE), Polyphenylenoxide (PPO), Polyphenylensulfid (PPS), fluorhaltige Polymere, bevorzugt Polytetrafluorethylen (PTFE), Polyvinylidenfluorid (PVDF), Perfluor(ethylen-propylen) (FEP) und Ethylen-tetrafluorethylen-Copolymere (ETFE), thermoplastische Elastomere, bevorzugt Polyetherblock-amide (PEBA), Einkomponenten Festsilikon-Elastomere, bevorzugt kaltvernetzende (RTV) oder heißvernetzende (HTV) Silikonkautschuke, flüssige Zweikomponenten-Silikonkautschuke (Liquid Silicone Rubber, LSR), bevorzugt Polydimethylsiloxan, Ethylen-Propylen-Dien-Kautschuke (EPDM), Epoxidharz-Vergussmassen (kalt- oder warmhärtend und/oder acrylatesterhaltige Epoxidharze sind.

8. Magnetodielektrisches Polymerkomposit nach einem oder mehreren der Ansprüche 1 bis 7, **dadurch gekennzeichnet, dass** die einzelnen Bestandteile durch Compoundierung miteinander vermischt werden, bevorzugt durch Vermischen in einem Extruder oder einem Kneter, oder dass es hergestellt wird durch Bereiten einer Dispersion aus einer Lösung des mindestens einen unpolaren Polymers, den Teilchen mit weichmagnetischen Eigenschaften und den amphiphilen hyperverzweigten Spacermolekülen und nachfolgendem Abtrennen des Lösungsmittels.

9. Magnetodielektrisches Polymerkomposit nach einem oder mehreren der Anspruch 5, **dadurch gekennzeichnet, dass** es zu 10 bis 80 Gew.-% aus dem mindestens einen unpolaren Polymer, zu 20 bis 90 Gew.-% aus den Teilchen mit weichmagnetischen Eigenschaften und zu 0,1 bis 10 Gew.-% aus amphiphilen hyperverzweigten Polyethyleniminen besteht.

10. Magnetodielektrisches Polymerkomposit nach einem oder mehreren der Ansprüche 1 bis 9, **dadurch gekennzeichnet, dass** damit eine Antenne umhüllt ist, die im Frequenzbereich von 50 MHz bis 4 GHz arbeitet.

11. Magnetodielektrisches Polymerkomposit nach einem oder mehreren der Ansprüche 1 bis 10, **dadurch gekennzeichnet, dass** es nach einem Formgebungsverfahren für Kunststoffe verarbeitbar ist, bevorzugt durch Spritzguss, Spritzprägen, Pressen, Extrudieren oder durch ein Harzgussverfahren.

12. Magnetodielektrisches Polymerkomposit nach einem oder mehreren der Ansprüche 1 bis 10, **dadurch gekennzeichnet, dass** es eine für den 3D-Druck geeignete Form aufweist, bevorzugt Filamente, Granulate, Pulver, flüssige Harze oder flüssige Silikonelastomere.

Anzahl der Abbildungen: 10

Abbildung 1

Abbildung 2

Abbildung 3

Abbildung 4

Abbildung 5

Abbildung 6

Abbildung 7

700      701

703

702

Abbildung 8

Abbildung 9

Abbildung 10

Europäisches Patentamt
European Patent Office
Office européen des brevets

# EUROPÄISCHER RECHERCHENBERICHT

**Nummer der Anmeldung**

**EP 23 20 1540**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/024911 A1 (BASF SE [DE]) 26. Februar 2015 (2015-02-26) * Seite 12, Zeilen 29-30 * * Seite 19, Zeilen 25-28 * * Seite 20, Zeile 4 * * Seite 22, Zeilen 1-2 * * Seite 20, Zeilen 24-28 * * Seite 12, Zeilen 21-27 * * Seite 17, Zeilen 16-31 * ----- | 1-12 | INV. H01F1/34 H01F1/37 H01F1/00 |
| X | US 2013/063296 A1 (HENNIG INGOLF [DE] ET AL) 14. März 2013 (2013-03-14) * Absätze [0094], [0105], [0150], [0219], [0221]; Ansprüche 16,17,23,33,38 * ----- | 1-12 | |
| A | DE 10 2018 115503 A1 (FREUDENBERG CARL KG [DE]) 2. Januar 2020 (2020-01-02) * Absätze [0018], [0029]; Ansprüche 1-15 * ----- | 1-12 | |
| A | MICHAEL GLADITZ ET AL: "Preparation of Silver Nanoparticle Dispersions via a Dendritic-Polymer Template Approach and their Use for Antibacterial Surface Treatment", MACROMOLECULAR MATERIALS AND ENGINEERING, Bd. 294, Nr. 3, 12. März 2009 (2009-03-12), Seiten 178-189, XP055064827, ISSN: 1438-7492, DOI: 10.1002/mame.200800269 * Zusammenfassung * ----- | 1-12 | **RECHERCHIERTE SACHGEBIETE (IPC)** <br><br> H01F |
| A | US 2019/221343 A1 (CHEN YAJIE [US] ET AL) 18. Juli 2019 (2019-07-18) * Ansprüche 1-20 * ----- | 1-12 | |

Der vorliegende Recherchenbericht wurde für alle Patentansprüche erstellt

| Recherchenort | Abschlußdatum der Recherche | Prüfer |
|---|---|---|
| München | 23. Februar 2024 | Primus, Jean-Louis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 20 1540

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-02-2024

| Im Recherchenbericht angeführtes Patentdokument | Datum der Veröffentlichung | Mitglied(er) der Patentfamilie | Datum der Veröffentlichung |
|---|---|---|---|
| WO 2015024911 A1 | 26-02-2015 | CN 105658400 A | 08-06-2016 |
| | | EP 3036076 A1 | 29-06-2016 |
| | | ES 2655856 T3 | 21-02-2018 |
| | | JP 6236532 B2 | 22-11-2017 |
| | | JP 2016528079 A | 15-09-2016 |
| | | KR 20160045812 A | 27-04-2016 |
| | | PL 3036076 T3 | 30-03-2018 |
| | | US 2016200081 A1 | 14-07-2016 |
| | | WO 2015024911 A1 | 26-02-2015 |
| US 2013063296 A1 | 14-03-2013 | KEINE | |
| DE 102018115503 A1 | 02-01-2020 | BR 112020024497 A2 | 02-03-2021 |
| | | CA 3104790 A1 | 02-01-2020 |
| | | CN 112399988 A | 23-02-2021 |
| | | DE 102018115503 A1 | 02-01-2020 |
| | | EP 3814414 A1 | 05-05-2021 |
| | | JP 2021534265 A | 09-12-2021 |
| | | US 2021289675 A1 | 16-09-2021 |
| | | WO 2020002511 A1 | 02-01-2020 |
| US 2019221343 A1 | 18-07-2019 | CN 111656466 A | 11-09-2020 |
| | | EP 3740957 A1 | 25-11-2020 |
| | | JP 2021510927 A | 30-04-2021 |
| | | KR 20200105671 A | 08-09-2020 |
| | | TW 201939532 A | 01-10-2019 |
| | | US 2019221343 A1 | 18-07-2019 |
| | | WO 2019143502 A1 | 25-07-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150255196 A
- KR 20180060496
- WO 2019143502 A
- WO 2019006184 A
- WO 2018119341 A
- WO 2018140588 A
- US 20090053512 A
- CN 111548612

**In der Beschreibung aufgeführte Nicht-Patentliteratur**

- **MOSALLAEI ; SARABANDI.** Magneto-Dielectrics in Electromagnetics: Concepts and Applications. *IEEE Transactions on Antennas and Propagation,* 2004, vol. 52 (6), 1558-1569
- **JUUTI ; TEIRIKANGAS.** Thermoplastic 0-3 Ceramic-Polymer Composites with Adjustable Magnetic and Dielectric Characteristics for Radio Frequency Applications. *International Journal of Applied Ceramic Technology,* 2010, vol. 7 (4), 452-460
- **YANG ; MITARBEITER.** Comprehensive Study on the Impact of Dielectric and Magnetic Loss on Performance of a Novel Flexible Magnetic Composite Material. *Proceeding of the 38th European Microwave Conference, in Amsterdam,* Oktober 2008
- Flexible Magnetic Polymer Composite Substrate with Ba1.5Sr1.5Z Hexaferrite Particles of VHF/Low UHF Patch Antennas for UAVs and Medical Implant Devices. *Materials,* 2020, vol. 13 (1021), 1-10
- **SEBASTIAN ; JANTUNEN.** Polymer-Ceramic Composites of 0-3 Connectivity for Circuits in Electronics: A Review. *International Journal of Applied Ceramic Technology,* 2010, vol. 7 (4), 415-434
- **WINKLER.** Dispergieren von Pigmenten und Füllstoffen, Farben und Lacke. *Herausgeber Vincentz,* November 2010
- Einfluss innerer Oberflächen auf die strukturellen und mechanischen Eigenschaften von Polymer-Metall-Verbunden. **DAMAVANDI.** Dissertation. Technischen Universität Kaiserslautern, 2015
- Dispersants and Coupling. Applied Plastics Engineering Handbook. Elsevier Inc, 2017

- Functional Fillers for Plastics. **XANTHOS.** Polyhedral Oligomeric Silsesquioxanes. WILEY-VCH Verlag, 2010
- **BLANCO ; MITARBEITER.** POSS-Based Polymers. *Polymers,* vol. 11 (1727), 1-5
- **LEE, HWANG.** Low Dielectric Materials for Micro-electronics in Dielectric Materials. INTECH Open Access Publisher, Januar 2012, 59-76
- **GAO ; YAN STELLEN.** Hyperbranched Polymers: from Synthesis to Applications. *Progress in Polymer Science,* 2004, vol. 29, 183-275
- **DOULOUDI ; MITARBEITERN.** Dendritic Polymers as promising Additives for the Manufacturing of Hybrid Organoceramic Nanocomposites with ameliorated Properties suitable for an extensive Diversity of Applications. *Nanomaterials,* 2021, vol. 11 (19), 1-36
- **SEBASTIAN, UBIC ; JANTUNEN.** Microwave Materials and Application. John Wiley & Sons, 2017, 855
- **MENEZES ; FECHINE.** From Magneto-Dielectric Biocomposite Films to Microstrip Antenna Devices. *Journal of Composite Science,* 2020, vol. 4 (144), 1-20
- Untersuchungen zur Herstellung, Charakterisierung und Applikation von antimikrobiellen Metall-Hybriden für Beschichtungen und Compounds. Dissertation. Martin-Luther-Universität Halle-Wittenberg, 12. Marz 2015
- Untersuchungen zur Herstellung, Charakterisierung und Applikation von antimikrobiellen Metall-Hybriden für Beschichtungen und Compounds. **GLADITZ.** Dissertation. Martin-Luther-Universität Halle-Wittenberg, 12. Marz 2015